# EUROPÄISCHE PATENTSCHRIFT

(11) **EP 1 340 169 B1**
(45) Veröffentlichungstag und Bekanntmachung des Hinweises auf die Patenterteilung: **21.06.2017**
(21) Anmeldenummer: 01999891.3
(22) Anmeldetag: 27.11.2001
(51) Int. Cl.: G06F 17/30

(54) **VERFAHREN UND VORRICHTUNG ZUR AUTOMATISCHEN AUSKUNFTERLEITUNG MITTELS EINER SUCHMASCHINE**
METHOD AND DEVICE FOR AUTOMATICALLY ISSUING INFORMATION USING A SEARCH ENGINE
PROCEDE ET DISPOSITIF DE FOURNITURE AUTOMATIQUE DE RENSEIGNEMENTS AU MOYEN D'UN MOTEUR DE RECHERCHE

(30) Priorität: 06.12.2000 DE 10060654
(43) Veröffentlichungstag der Anmeldung: 03.09.2003
(73) Patentinhaber: Volt Delta International GmbH, 80339 München (DE)
(72) Erfinder: PLANNERER, Bernd, 81369 München (DE); DAHMEN, Michael, 85737 Ismaning (DE); HEIDENFELDER, Klaus, 74259 Widdern (DE); WAGNER, Johannes, 80803 München (DE)
(74) Vertreter: Samson & Partner Patentanwälte mbB
(86) Internationale Anmeldenummer: PCT/EP2001/013847
(87) Internationale Veröffentlichungsnummer: WO 2002/046956

(56) Entgegenhaltungen:
- EP-A- 0 319 140
- US-A- 5 638 425
- US-A- 6 122 361

## Beschreibung

Die vorliegende Erfindung betrifft ein Verfahren sowie eine Vorrichtung zur automatischen Auskunfterteilung mittels einer Suchmaschine, in der gesuchte Informationen zusammen mit weiteren, zugehörigen Attributen in Form von Datensätzen gespeichert sind.

Auf dem Gebiet der Telekommunikation sind große Mengen von Auskünften z.B. betreffend Telefonnummern gewünschter Gesprächsteilnehmer handzuhaben. In der Regel sind die Telefonnummern möglicher Gesprächsteilnehmer zusammen mit weiteren Attributen derselben wie z. B. Name, Vorname, Firmenname, Land, Ort, Postleitzahl, Straße und/oder Hausnummer in der Suchmaschine gespeichert. Aufgrund der großen Vielzahl von möglichen Gesprächsteilnehmern, sind mehrere dieser zusätzlichen Attribute zu ermitteln und miteinander zu verknüpfen, um den gewünschten Gesprächsteilnehmer ermitteln zu können. Dieser komplexe Vorgang erfordert bislang menschlichen Einsatz, um zu vernünftigen Auskunftergebnissen zu kommen.

Es wurde bereits vorgeschlagen, einzelne Schritte der Auskunfterteilung zu automatisieren. In diesem Kontext schlagen z. B. die Druckschriften US 5,181,237, US 5,185,781 und US 5,163,083 vor, die in den USA noch heute übliche Vermittlung per Hand durch ein automatisches Verfahren zur Weitervermittlung zu ersetzen. Ferner ist in der US 5,014,303 ein halbautomatisches Verfahren zur Auskunftserteilung beschrieben, bei dem von einem Anrufer eingegebene Suchargumente wie Name, Stadt etc. zunächst aufgezeichnet werden, und dann komprimiert zu einer menschlichen Auskunftskraft weitergeleitet werden, um deren zeitliche Inanspruchnahme zu verringern. In der Druckschrift US 5,638,425 wird ein Auskunftssystem beschrieben, in dem schrittweise zunächst eine Stadt bestimmt wird, dann wird auf der Datenbasis der erkannten Stadt die Erkennung des Namens der gewünschten Person durchgeführt. EP 0 319 140 bezieht sich auf ein Spracherkennungssystem, bei welchem eine Vorauswahl von Kandidatenwörtern erzeugt werden soll. Dazu wird ein einzelnes eingegebenes (gesprochenes) Wort zunächst durch ein Kennzeichenalphabet repräsentiert, und für jedes Wort aus einem Vokabular bekannter Wörter wird ein Konfidenzwert berechnet, der eine ungefähre Angabe darstellt, wie ähnlich das eingegebene Wort zu dem jeweiligen Wort aus dem Vokabular ist. Schließlich ist in der US 5,479,488 ein Verfahren sowie eine Vorrichtung beschrieben, die mittels einer Spracherkennungseinheit verschiedene Attribute eines gewünschten Gesprächsteilnehmers wie Stadt und Name abfragt, um die Telefonnummer des gewünschten Gesprächsteilnehmers zu ermitteln. Um die von der automatischen Spracherkennung erzeugten Mehrdeutigkeiten zu reduzieren, wird die Telefonnummer des Auskunftssuchenden erfasst, anhand dieser der Standort des Auskunftssuchenden bestimmt und sodann aufgrund statistischer Überlegungen das nach dem gewünschten Gesprächsteilnehmer zu durchsuchende Gebiet bzw. die entsprechende Datenmenge beschrankt. Diese Vorgehensweise ist jedoch zwangsweise dann nachteilig, wenn nach Gesprächsteilnehmern außerhalb der aufgestellten geographischen Verteilungsregeln gesucht wird.

Der vorliegenden Erfindung liegt daher die Aufgabe zugrunde, ein vollautomatisches Verfahren und eine vollautomatische Vorrichtung zur Auskunfterteilung der eingangs genannten Art zu schaffen, die Nachteile des Standes der Technik vermeiden und letzteren in vorteilhafter Weise weiterbilden.

Hinsichtlich des Verfahrens wird diese Aufgabe erfindungsgemäß durch ein Verfahren gemäß Patentanspruch 1 gelost. Hinsichtlich der Vorrichtung wird die genannte Aufgabe durch eine Vorrichtung gemäß Patentanspruch 14 gelöst. Vorteilhafte Ausgestaltungen der Erfindung sind Gegenstand der abhängigen Ansprüche.

Die Erfindung geht von der Erkenntnis aus, mit einer mehrdeutigen Suchanfrage an die Suchmaschine aufgrund der beschrankten Menge real existierender Datenbankeintrage trotz der mehrdeutigen Anfrage ein eindeutiges Ergebnis zu erzielen.

Zunächst kann mit Hilfe einer geeigneten Abfrageeinrichtung ein Suchargument eines gewünschten Teilnehmers für ein Attribut, gerichtet an einen Auskunftsuchenden abgefragt werden. Insbesondere können als Suchargumente Name, Vorname bzw. Firmenname, Ort und/oder Straße des gewünschten Gesprächsteilnehmers abgefragt werden, die von dem Auskunftsuchenden mittels einer geeigneten Eingabevorrichtung eingegeben werden können. Die mit der Abfrage für ein Attribut erhaltene verbale Information wird sodann mit den im zu diesem Attribut gehörenden Lexikon gespeicherten Einträgen verglichen. Es erfolgt sodann für jedes der eingegebenen Suchargumente eine Ermittlung einer Treffermenge von Einträgen in dem zu dem Attribut gehörenden Lexikon, die der bei der Abfrage für das Attribut erhaltenen Information entsprechen bzw. am nächsten kommen. Es werden Einzelkonfidenzwerte für die zur Treffermenge gehörenden Einträge ermittelt, die eine Wahrscheinlichkeit angeben, mit der der jeweilige Eintrag mit dem tatsächlich eingegebenen Suchargument übereinstimmt. Anhand der für das jeweilige Attribut in der Regel mehrdeutigen Treffermenge von ausgewählten, gespeicherten Suchargumenten wird sodann eine Suchanfrage nach allen Datensätzen durchgeführt, die irgendeine Kombination der gefundenen Einträge der verschiedenen Treffermengen erfüllen, wobei in der Suchanfrage alle möglichen Kombinationen der ausgewählten Suchargumente permutiert werden, und die Datensätze, die die Suchanfrage erfüllen, zurückgeliefert werden. In der Regel werden dies aufgrund der Vielzahl der Eintrage mehrere Datensätze sein. Falls ein nicht eindeutiges Ergebnis erzielt wird, d.h. mehrere Datensätze erhalten werden, ist eine Gewichtung der erhaltenen Datensätze mit Gesamtkonfidenzwerten vorgesehen, die eine Wahrscheinlichkeit der Übereinstimmung des jeweils erhaltenen Datensatzes mit der bei der Abfrage für die mehreren Attribute erhaltenen verbalen Information angeben, und zwar in Abhängigkeit von den Einzelkonfidenzwerten der zum jeweiligen Datensatz gehörenden Einträge. Schließlich wird ein oder mehrere Datensätze mittels einer geeigneten Ausgabeeinrichtung an den Auskunftsuchenden ausgegeben. Die Auswahl der auszugebenden Datensätze erfolgt anhand der Gesamtkonfidenzwerte, d. h. der Wahrscheinlichkeit dafür, daß diese mit dem gesuchten Datensatz übereinstimmen.

In Weiterbildung der Erfindung ist eine Spracherkennungseinrichtung vorgesehen, mit Hilfe derer die Abfrage der Suchargumente phonetisch durchgeführt wird. Der jeweils Auskunftsuchende spricht die Attribute wie z. B. Namen, Vornamen und Straße sowie Ort des gewünschten Gesprächsteilnehmers in die Eingabeeinrichtung. Die Spracherkennungseinrichtung wandelt diese gesprochenen Informationen sodann in geeignete Daten um, die mit den entsprechenden, abgespeicherten Suchargumenten verglichen werden können. Die Spracherkennung besitzt insbesondere bei der Auskunftserteilung im Telekommunikationsbereich große Vorteile, da üblicherweise mit Hilfe des Telefons die gewünschte Telefonnummer erfragt wird.

Die Abfrage der einzugebenden Suchargumente kann in verschiedener Weise erfolgen. Beispielsweise wäre sie über Bildschirmsteuerung, E-Mail und dergleichen möglich. Besondere Vorteile besitzt jedoch die oben genannte Abfrage mit Hilfe einer Spracherkennungseinrichtung.

In Weiterbildung der Erfindung wird die Abfrage der Suchargumente schrittweise und dialoggesteuert durchgeführt. Insbesondere wird für jedes Attribut des gesuchten Datensatzes, z. B. Name, Vorname, Ort und Straße des gewünschten Gesprächsteilnehmers, das entsprechende Suchargument nach Absetzen einer entsprechenden Aufforderung separat abgefragt. Eine Erkennung der Suchargumente aus frei gesprochenen Text ist ebenso möglich.

Die Zuordnung eines oder mehrerer gespeicherter Suchargumente zu dem tatsächlich eingegebenen Suchargumente kann in verschiedener Art und Weise erfolgten, In Weiterbildung der Erfindung ist eine Partitionierung und Aufteilung der relevanten, abgespeicherten Informationen vorgesehen, mit denen die eingegebenen Suchargumente verglichen werden. Insbesondere sind die gespeicherten Suchargumente für die einzelnen Attribute in jeweils separaten Lexika abgespeichert. Insbesondere kann ein Namensverzeichnis, ein Vornamensverzeichnis, ein Ortsverzeichnis und/oder ein Straßennamenverzeichnis bereitgestellt werden. Der Vergleich zwischen eingegebenen und gespeicherten Suchargumenten wird dann nur auf der Basis des jeweils einen einschlägigen Verzeichnisses durchgeführt. Dies beschleunigt und vereinfacht den Vergleichsvorgang beträchtlich, da jeweils nur kleinere Mengen an Daten abgeglichen werden müssen. Zudem kann eine bessere Erkennungsqualität und damit eine höhere Trefferwahrscheinlichkeit erreicht werden, da nur einschlägige gespeicherte Suchargumente zugeordnet werden können.

In Weiterbildung der Erfindung werden die ausgewählten und einem eingegebenen Suchargument zugeordneten Suchargumente aus dem Suchargumentespeicher mit absoluten Konfidenzwerten gewichtet. Vorzugsweise können Abfrage, Vergleich und Gewichtung betreffend ein Suchargument wiederholt werden, wenn der zugeordnete absolute Konfidenzwert außerhalb eines vorgegebenen Konfidenzwertebereichs liegen würde. Dies kann zumindest dann vorgesehen sein, wenn keines der ausgewählten Suchargumente bezüglich eines Attributs mit seinem Konfidenzwert innerhalb des vorbestimmten Wertebereichs liegt, also dann, wenn die Trefferwahrscheinlichkeit bei keinem der ausgewählten Suchargumente für ein Attribut ausreichend groß ist.

Zur Bestimmung der Datensätze, die der Suchanfrage entsprechen können, kann verschieden vorgegangen werden. Vorzugsweise werden zunächst die Datensätze ausgewählt, bei denen sämtliche Attribute die unscharfe Suchanfrage erfüllen, also die, die jeweils einem der Suchargumente einer jeden Treffermenge der ausgewählten Suchargumente entsprechende Attribute enthalten. Die Abfrage der Suchmaschine wird hierzu derart gestaltet, daß die mehreren ausgewählten Suchargumente für das selbe Attribut einer ODER Verknüpfung unterworfen werden und die verschiedenen Treffermengen der Suchargumente für verschiedene Attribute einer UND Verknüpfung unterworfen werden.

Wenn jedoch kein Datensatz gefunden wird, der alle abgefragten Attribute enthält, dann kann der Datensatz ausgewählt werden, der die größte Anzahl an mit der Anfrage übereinstimmenden Attributen besitzt.
Werden zuviele Datensätze gefunden, kann durch die Abfrage weiterer Attribute die Liste eingeschränkt werden. Hierzu werden vorzugsweise die Lexika des Erkenners dynamisch auf die Menge der Attributwerte der gefundenen Datensätze reduziert, was die Trefferwahrscheinlichkeit deutlich erhöht.

Die Gesamtkonfidenzwerte der ausgewählten Datensätze können in verschiedener Weise berechnet werden. Die entsprechende Recheneinrichtung des Systems kann derart ausgebildet sein, daß die Gesamtkonfidenzwerte durch Multiplikation der einzelnen Konfidenzwerte, die den Attributen des jeweiligen Datensatzes bzw. den entsprechenden Suchargumenten zugeordnet wurden, bestimmt werden. Andere Verrechnungsmethoden sind jedoch möglich. Insbesondere kann eine unterschiedliche Gewichtung der einzelnen Konfidenzwerte für die Berechnung des Gesamtkonfidenzwertes erfolgen.

Um die Komplexität der Anfrage zu reduzieren, können Teile der Suchanfrage per Rückfrage im Dialog vom Auskunftssuchenden eindeutig bestätigt werden. Anstelle einer Mehrzahl von ausgewählten Suchargumenten kann dann für das jeweilige Attribut ein einzelnes Suchargument in die Suchanfrage an die Suchmaschine aufgenommen werden.

Die Ausgabe des ermittelten Datensatzes erfolgt vorzugsweise durch automatische Ansage. Hier kann beispielsweise eine an sich bekannte computergestützte Ansageeinheit Verwendung finden, mit der in Telefonauskunftssystemen die gewünschten Telefonnummern angesagt werden. Die Ausgabe über SMS, eMail, Fax etc. ist ebenso möglich.

Nachfolgend wird die Erfindung anhand eines bevorzugten Ausführungsbeispieles und zugehöriger Zeichnungen näher erläutert. In den Zeichnungen zeigen:
- Figur 1: Eine schematische Darstellung einer Vorrichtung zur automatischen Auskunfterteilung gemäß einer bevorzugten Ausführung der Erfindung,
- Figur 2: Ein Funktionsdiagramm, das den Ablauf der automatischen Auskunftserteilung wiedergibt,
- Figur 3: Eine Trefferliste ausgewählter Suchargumente für ein Suchbeispiel,
- Figur 4: Eine Liste ausgewählter Datensätze für das Suchbeispiel gemäß Figur 3,
- Figur 5: Eine aus den Trefferlisten generierte Anfrage an die Suchmaschine,
- Figur 6: Ein Funktionsdiagramm, das den Ablauf der automatischen Auskunftserteilung bei zu vielen gefundenen Datensätzen wiedergibt,
- Figur 7: Eine Liste gefundener Datensätze, aus denen keiner eindeutig ausgewählt werden kann, und
- Figur 8: Eine Liste gefundener Datensätze mit einem zusätzlichen Attribut, das eine eindeutige Auswahl ermöglicht.

Nachfolgend wird ein Telefonnummernauskunftssystem gemäß einer vorteilhaften Ausführung der Erfindung anhand der Erläuterung einer Suche nach privaten Teilnehmern erläutert. Es versteht sich jedoch, daß selbstverständlich auch eine Suche nach Firmen oder Behörden möglich ist. Die Unterschiede liegen in der Anzahl der Suchfelder, da z. B. ein Vorname wegfällt, sowie in der Vergrößerung der Namenslisten für die Lexika der Spracherkennungseinrichtung.

Ein eingehender Anruf von einer Teilnehmerstation 1 wird zunächst an der Eingabe-Ausgabeeinrichtung 2, die eine Telefonschnittstelle des Systems bildet, angenommen. Das Auskunftssystem 3 beginnt einen automatischen Dialog mit dem Anrufer an der Teilnehmerstation 1. In diesem Dialog werden vom System die einzelnen Suchargumente wie z. B. Name, Vorname und Wohnort des gewünschten Gesprächsteilnehmers aufgezeichnet und die gesprochenen Eingaben an die Spracherkennungseinrichtung 4 gesendet.

Zunächst kann eine Begrüßung mit eventueller kurzer Erklärung des Systems ausgesendet werden. Sodann erfolgt eine Aufforderung zum Sprechen des Wohnortes des gewünschten Gesprächsteilnehmers. Der Anrufer spricht sodann den Ort des gewünschten Gesprächsteilnehmers. Dies zeichnet das System auf und sendet es an die Spracherkennungseinrichtung 4, die sodann aus einem Speicher 5 abgespeicherte Ortsnamen auswählt, die dem gesprochenen Ortsnamen am nächsten kommen. Der Speicher 5 enthält hierfür ein Ortslexikon, in dem mögliche Orte möglicher Gesprächsteilnehmer abgespeichert sind. Als Ergebnis der Spracherkennung wird von der Spracherkennungseinrichtung 4 eine Wortliste mit einer Anzahl N der wahrscheinlichsten Erkennungsergebnisse ermittelt. Die Zahl N ist dabei ein einstellbarer Parameter, der eine wichtige Konfigurationsmöglichkeit des Auskunftssystems darstellt. Die Spracherkennungseinrichtung 4 ermittelt zudem für jedes der Erkennungsergebnisse einen Konfidenzwert (score), der die Wahrscheinlichkeit angibt, mit der der ausgewählte Ortsname mit dem tatsächlich gesprochenen Ortsnamen übereinstimmt.

Die Schritte Aufforderung zur Eingabe, Eingabe durch den Auskunftssuchenden durch Sprechen sowie die Erkennung der gesprochenen Eingabe durch die Spracherkennungseinrichtung 4 mit Ermittlung der Trefferliste als Ergebnis mit Konfidenzwerten werden nachfolgend für die weiteren Suchargumente wiederholt, im gezeigten Ausführungsbeispiel für den Nachnamen sowie den Vornamen des gewünschten Gesprächsteilnehmers. Dem Auskunftssuchenden unbekannte Attribute können weggelassen werden.

Wenn der Konfidenzwert des Erkennungsergebnisses der Spracherkennungseinrichtung 4 für einzelne Attribute unter einen Schwellwert liegt, kann der Vorgang für dieses Attribut wiederholt werden. Bei wiederholtem Scheitern der Erkennung kann gegebenenfalls Buchstabiererkennung eingesetzt werden.

Für bestimmte Argumente kann es sinnvoll sein, den von der Spracherkennungseinrichtung 4 erkannten Namen vom Auskunftssuchenden durch Rückfrage durch das System bestätigen zu lassen. Hierdurch reduziert sich die Komplexität der nachfolgenden Suchmaschinesuche.

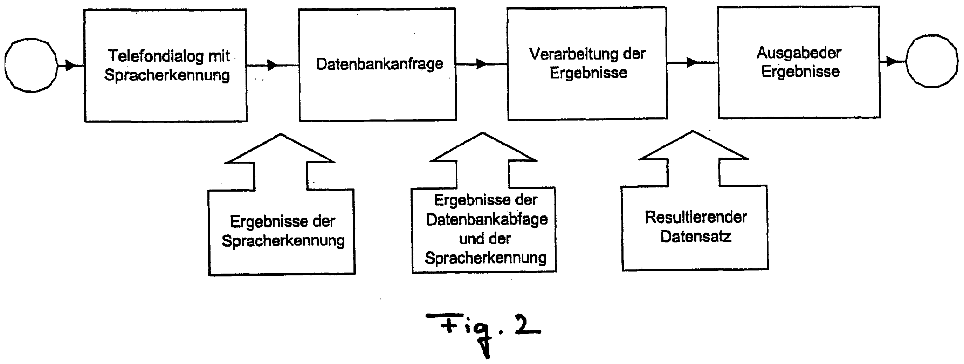

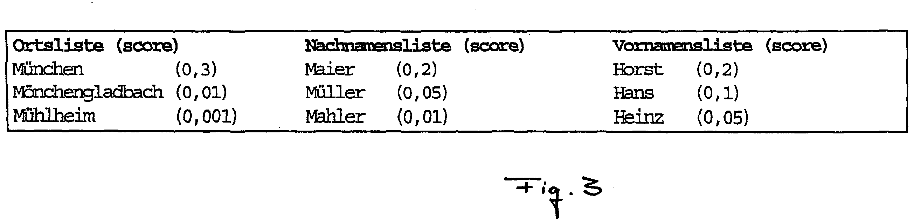

Am Ende des automatischen Dialogs (Figur 2) liegen dann mehrere Trefferlisten der für die jeweiligen Suchattribute ausgewählten Suchargumente vor. Wird z. B. nach einem Gesprächsteilnehmer "Hans Maier in München" gesucht und die Anzahl N der in die Liste aufzunehmenden Erkennungsergebnissen mit N = 3 festgelegt, können sich die Trefferlisten gemäß Figur 3 ergeben. Die Konfidenzwerte für die entsprechenden Treffer sind in der Figur hinter den Treffern in Klammern angegeben.

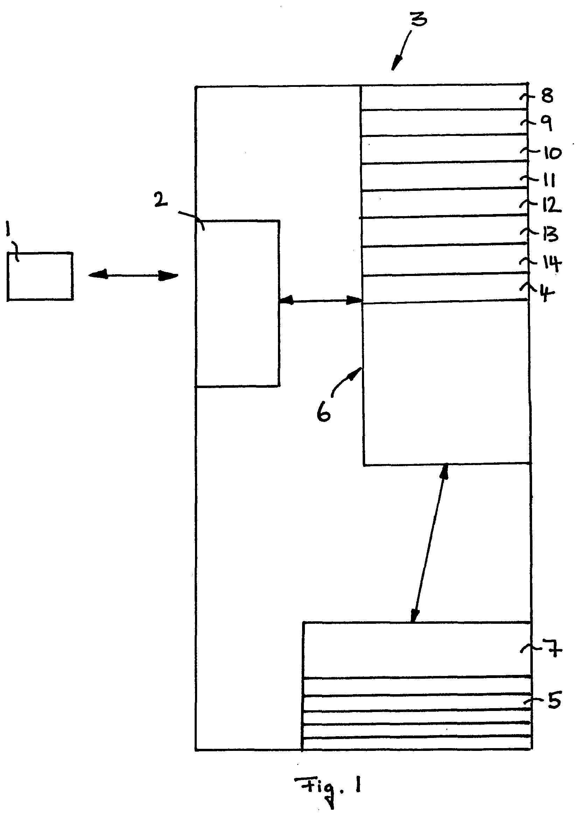

Die Rechnereinrichtung 6 des Auskunftssystems 3 geniert sodann eine Anfrage an die Suchmaschine, die die Datensätze mit den gewünschten Telefonnummern enthält. Diese Suchmaschine ist in Figur 1 mit der Bezugsziffer 7 gekennzeichnet. Sie ist nicht notwendigerweise interner Bestandteil des Systems, in der vorliegenden Ausführungsform jedoch so dargestellt.

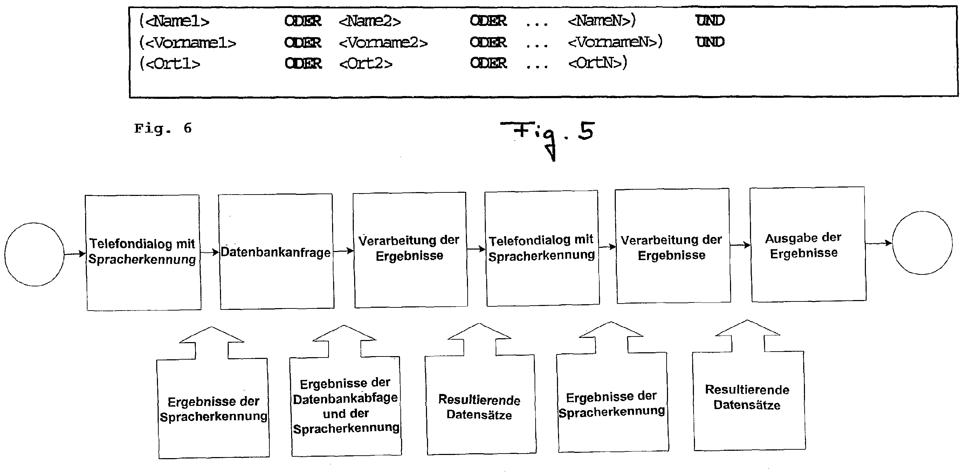

Die Anfrage an die Suchmaschine 7 enthält alle Elemente der Trefferlisten, die mit logischen UND und ODER Verknüpfungen kombiniert werden. Dabei werden alle möglichen Kombinationen der ausgewählten Suchargumente permutiert. Die resultierende Anfrage hat somit die in Figur 5 dargestellte Form.

Bei der Spracherkennung wird vorzugsweise derart vorgegangen, daß jedem eingegebenen Suchargument ein Treffer zugeordnet wird, auch wenn kein identischer Eintrag in dem entsprechenden Lexikon festgestellt werden kann. Es wird das am nächsten klingende Wort aus dem Lexikon gesucht. Hierdurch wird auch bei einem selten vorkommende Worte nicht enthaltenden Lexikon eine 100%ige Abbildung der eingegebenen Suchargumente auf gespeicherte Suchargumente erhalten. Es erfolgt hierbei eine entsprechende Gewichtung der gefundenen Treffer durch den entsprechenden Konfidenzwert.

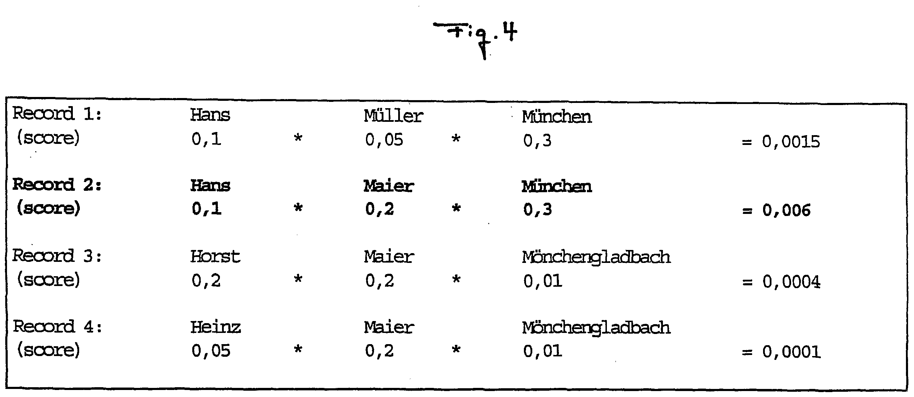

Die Rechnereinrichtung 6 schickt sodann die generierte Suchmaschineanfrage an die Suchmaschine 7 und wählt alle Datensätze aus, die die Suchanfrage erfüllen. Es wird sodann eine Liste der ausgewählten Datensätze erstellt. Bei dem in Figur 4 dargestellten Suchergebnis wurden nach der Suchmaschineanfrage von allen möglichen Kombinationen vier existierende Einträge zurückgeliefert. Die Suchmaschineanfrage wurde erfüllt von "Hans Müller in München", "Hans Maier in München", "Horst Maier in Mönchengladbach", sowie von "Heinz Maier in Mönchengladbach". Aufgrund der unscharfen Suchmaschineanfrage wurde also ein nicht eindeutiges Ergebnis erzielt, daß nun in einem nachfolgenden Auswerteschritt bzw. einer Nachverarbeitung analysiert wird.

Durch diese Nachverarbeitung können eventuelle Fehler bzw. Ungenauigkeiten beim Spracherkennungsvorgang durch Vergleich bzw. Verrechnung mit den Daten aus dem vorhandenen Datenbestand kompensiert werden. Wenn z. B. ein von der Spracherkennungseinrichtung als "sehr gut erkannt" klassifizierter Name in der Suchmaschine nicht bzw. in Verbindung mit den weiteren Attributen nicht existiert, so kann man davon ausgehen, daß dieses Erkennungsergebnis trotzdem nicht das richtige war. In diesem Fall kann z. B. das zweitbeste Ergebnis zutreffen.

Hierzu wird für die vier ermittelten Datensätze jeweils ein Gesamtkonfidenzwert errechnet, der in Figur 4 in der rechten Spalte angegeben ist. Die Konfidenzwerte, die den einzelnen Attributen eines jeden Datensatzes bzw. den entsprechenden ausgewählten Suchargumenten von der Spracherkennungseinrichtung 4 zugeordnet wurden, werden miteinander multipliziert, so daß sich am Beispiel des Datensatzes 1 der Gesamtkonfidenzwert als Produkt der Einzelkonfidenzwerte 0,1 und 0,05 und 0,3 ergibt, nämlich Gesamtkonfidenzwert = 0,0015. Im gezeigten Ausführungsbeispiel findet eine Gewichtung der einzelnen Konfidenzwerte durch zusätzliche Faktoren nicht statt. Es ist jedoch sehr wohl möglich, die Konfidenzwerte für einzelne Attribute, z. B. für den Nachnamen höher zu gewichten.

Im gezeigten Ausführungsbeispiel gemäß Figur 4 ist der Ergebnisdatensatz Nr. 2 der mit dem höchsten Gesamtkonfidenzwert, nämlich von 0,006. Das Auskunftsystem 3 schließt nun hieraus, daß dies mit sehr hoher Wahrscheinlichkeit der gesuchte Eintrag ist. Dies bestimmt das Auskunftsystem 3, obwohl der Vorname "Hans" nicht der beste aus der Vornamensliste ist, die die Spracherkennungseinrichtung 4 erstellt hat.

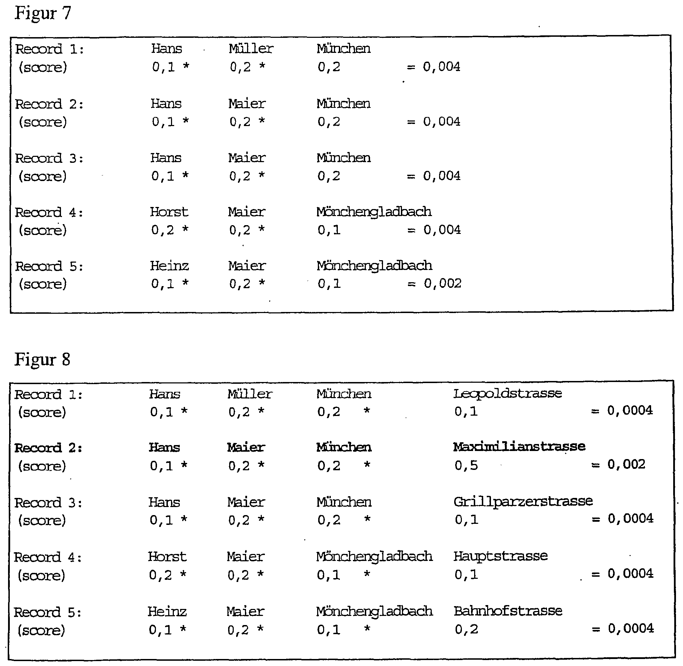

Ein weiteres Beispiel erläutert die Behandlung von zu vielen gefundenen Datensätzen (Figur 6):
In der Nachverarbeitung können sich mehrere Datensätze mit nahezu gleichem Konfidenzwert ergeben, so daß kein eindeutig bervorzugter Datensatz für die Ausgabe ausgewählt werden kann. Dies ist in Figur 7 beispielhaft dargestellt. In diesem Fall wird ein weiteres Attribut, im vorliegenden Fall der Straßenname abgefragt. Das dafür benötigte Lexikon des Erkenners wird hierfür zur Laufzeit aus allen Straßennamen der bereits gefundenen Datensätze aufgebaut, im vorliegenden Beispiel aus den Straßennamen Leopoldstraße, Maximilianstraße, Grillparzerstraße, Hauptstrasse und Bahnhofstrasse (vgl. Fig. 8). Durch die zusätzliche Abfrage und Erkennung des Straßennamen ist es möglich, ein zusätzliches Attribut mit Gewichtungsfaktor für die Berechnung des Gesamtkonfidenzwertes zu ermitteln. Die Erkennungsgüte des Gesamtsystems wird hierdurch drastisch verbessert. In dem Beispiel gemäß Figur 8 wird der Datensatz "Hans Maier in der Maximilianstraße in München" ausgegeben.

## Patentansprüche

1. Verfahren zur automatischen telefonischen Auskunfterteilung mittels gespeicherter Lexika für mögliche Einträge von einzelnen Attributen, mittels einer Suchmaschine (7), in der gesuchte Informationen, zusammen mit zugehörigen Attributen in Form von Datensätzen gespeichert sind, und mittels einer Spracherkennungseinrichtung (4), mit folgenden Schritten:
(a) Abfrage eines Sucharguments eines gewünschten Teilnehmers für ein Attribut, gerichtet an einen Auskunftsuchenden,
(b) Vergleich der mit der Abfrage für ein Attribut erhaltenen verbalen Information mit den im zu diesem Attribut gehörenden Lexikon gespeicherten Einträgen, Ermittlung einer Treffermenge von Einträgen in dem zu dem Attribut gehörenden Lexikon, die der bei der Abfrage für das Attribut erhaltenen Information entsprechen oder am nächsten kommen, Ermittlung von Einzelkonfidenzwerten für die zur Treffermenge gehörenden Einträge durch die Spracherkennungseinrichtung (4), die eine Wahrscheinlichkeit der Übereinstimmung des jeweiligen Eintrags mit der bei der Abfrage für das Attribut erhaltenen Information angeben,
(c) wiederholte Durchführung der Schritte (a) und (b) für ein oder mehrere weitere Attribute, unter Verwendung des jeweils zu dem weiteren Attribut gehörenden Lexikons,
(d) Durchführen eine Suchanfrage nach allen Datensätzen, die irgendeine Kombination der in den Schritten (a) - (c) gefundenen Einträge der verschiedenen Treffermengen erfüllen, wobei in der Suchanfrage alle möglichen Kombinationen der ausgewählten Suchargumente permutiert werden, und die Datensätze, die die Suchanfrage erfüllen, zurückgeliefert werden,
(e) falls ein nicht eindeutiges Ergebnis erzielt wird, d.h. mehrere Datensätze erhalten werden, Gewichtung der erhaltenen Datensätze mit Gesamtkonfidenzwerten, die eine Wahrscheinlichkeit der Übereinstimmung des jeweils erhaltenen Datensatzes mit den bei der Abfrage für die mehreren Attribute erhaltenen verbalen Information angeben, in Abhängigkeit von den Einzelkonfidenzwerten der zum jeweiligen Datensatz gehörenden Einträge, und Ausgabe des Datensatzes mit dem größten Gesamtkonfidenzwert.

2. Verfahren nach dem vorhergehenden Anspruch, wobei die Abfrage der Suchargumente phonetisch mittels einer Spracherkennungseinrichtung (4) durchgeführt wird.

3. Verfahren nach einem der vorhergehenden Ansprüche, wobei die Abfrage der Suchargumente schrittweise für jedes Attribut separat und/oder dialoggesteuert durchgeführt wird.

4. Verfahren nach einem der vorhergehenden Ansprüche, wobei mehrere separate Lexika entsprechend verschiedenen Typen von Attributen bereitgestellt werden und der Vergleich zwischen eingegebenen Suchargumenten und Lexika für ein jeweils eingegebenes Suchargument auf der Basis nur jeweils eines Lexikons durchgeführt wird.

5. Verfahren nach einem der vorhergehenden Ansprüche, wobei die ausgewählten Suchargumente mit absoluten Konfidenzwerten gewichtet werden, wobei vorzugsweise ein Konfidenzwertbereich vorgegeben wird und bei außerhalb dieses Konfidenzwertbereichs liegenden Konfidenzwerten für das entsprechende Suchargument die Schritte (a) und (b) gemäß Anspruch 1 wiederholt werden.

6. Verfahren nach einem der vorhergehenden Ansprüche, wobei mit der Suchanfrage solche Datensätze ausgewählt werden, die jeweils einem der Suchargumente einer jeden Treffermenge entsprechende Attribute enthalten.

7. Verfahren nach einem der vorhergehenden Ansprüche, wobei mit der Suchanfrage solche Datensätze ausgewählt werden, die die größte Anzahl an mit jeweils einem der Suchargumente einer jeden Treffermenge übereinstimmende Attribute besitzen.

8. Verfahren nach einem der vorhergehenden Ansprüche, wobei die Gesamtkonfidenzwerte durch Multiplikation der einzelnen Konfidenzwerte, die den Attributen des jeweiligen Datensatzes bzw. den entsprechenden Suchargumenten zugeordnet wurden, bestimmt werden, wobei vorzugsweise Konfidenzwerte für verschiedene Attribute des jeweiligen Datensatzes bzw. den entsprechenden Suchargumenten einzeln gewichtet werden.

9. Verfahren nach einem der vorhergehenden Ansprüche, wobei für ausgewählte Suchargumente für eines oder einzelne der Attribute eine Rückfrage, die das ausgewählte Suchargument für das jeweilige Attribut mit dem besten Konfidenzwert wiedergibt, generiert und die Treffermenge der ausgewählten Suchargumente für das jeweilige Attribut bei Rückbestätigung der Rückfrage bzw. des entsprechenden Sucharguments auf dieses Suchargument mit dem besten Konfidenzwert beschränkt wird.

10. Verfahren nach einem der vorhergehenden Ansprüche, wobei die Ausgabe des Datensatzes gemäß Schritt (e) in Anspruch 1 akustisch mittels einer Sprachwiedergabeeinheit (8) durchgeführt wird.

11. Verfahren nach einem der vorhergehenden Ansprüche, wobei mehrere Datensätze ausgegeben werden entsprechend ihrer Gesamtkonfidenzwerte.

12. Verfahren nach dem vorhergehenden Anspruch, bei dem zur Auswahl eines Datensatzes ein weiteres Attribut abgefragt wird, wobei vorzugsweise das eingegebene Suchargument nur mit den Attributwerten der bereits gefundenen Datensätze verglichen wird.

13. Verfahren nach einem der vorhergehenden Ansprüche, wobei es zur Ansage von Telefonnummern verwendet wird.

14. Vorrichtung zur automatischen telefonischen Auskunfterteilung mittels gespeicherter Lexika für mögliche Einträge von einzelnen Attributen, und mittels einer Suchmaschine (7), in der gesuchte Informationen zusammen mit zugehörigen Attributen in Form von Datensätzen gespeichert sind, mit einer Eingabeeinrichtung (2) zur verbalen Eingabe eines Sucharguments eines gewünschten Teilnehmers für ein Attribut, einer Vergleichseinrichtung (9) zum Vergleich der mit der Eingabe für ein Attribut erhaltenen Information mit den im zu diesem Attribut gehörenden Lexikon gespeicherten Einträgen, einer Auswahleinrichtung (10) zur Ermittlung einer Treffermenge von Einträgen in dem zu dem Attribut gehörenden Lexikon, die der bei der Eingabe für das Attribut erhaltenen, Information entsprechen oder am nächsten kommen, einer Spracherkennungseinrichtung (4) zur Ermittlung von Einzelkonfidenzwerten für die zur Treffermenge gehörenden Einträge, die eine Wahrscheinlichkeit der Übereinstimmung des jeweiligen Eintrags mit der bei der Abfrage für das Attribut erhaltenen Information angeben, wobei die Eingabe eines Sucharguments, der Vergleich der mit der Eingabe erhaltenen Information mit den gespeicherten Einträgen, die Ermittlung einer Treffermenge von Einträgen und die Ermittlung von Einzelkonfidenzwerten für die zur Treffermenge gehörenden Einträge wiederholt für ein oder mehrere weitere Attribute unter Verwendung des jeweils zu dem weiteren Attribut gehörenden Lexikons durchführbar ist, einer Einrichtung zur Durchführung einer Suchanfrage (12) nach allen Datensätzen, die irgendeine Kombination der gefundenen Einträge der verschiedenen Treffermengen erfüllen, wobei in der Suchanfrage alle möglichen Kombinationen der ausgewählten Suchargumente permutiert werden, und die Datensätze, die die Suchanfrage erfüllen, zurückgeliefert werden, einer Recheneinrichtung (6) zur Berechnung von Gesamtkonfidenzwerten für die erhaltenen Datensätze, die eine Wahrscheinlichkeit der Übereinstimmung des jeweils erhaltenen Datensatzes mit der bei der Eingabe für die mehreren Attribute erhaltenen verbalen Information angeben, in Abhängigkeit von den Einzelkonfidenzwerten der zum jeweiligen Datensatz gehörenden Einträge, und einer Ausgabeeinrichtung (2) zur Ausgabe des Datensatzes mit dem größten Gesamtkonfidenzwert.

15. Vorrichtung nach Anspruch 14, wobei die Spracherkennungseinrichtung (4) zur Spracherkennung von gesprochen eingegebenen Suchargumenten vorgesehen ist.

16. Vorrichtung nach Anspruch 14 oder 15, wobei eine Abfrageeinrichtung (13) vorgesehen und derart ausgebildet ist, daß die einzugebenden Suchargumente schrittweise für jedes Attribut separat und/oder dialoggesteuert abgefragt werden.

17. Vorrichtung nach einem der Ansprüche 14 bis 16, wobei ein mit der Spracherkennungseinrichtung (4) verbindbarer Speicher (5) vorgesehen ist, in dem mehrere separate Lexika entsprechend verschiedenen Typen von Attributen gespeichert sind, und wobei die Vergleichseinrichtung (9) derart ausgebildet ist, daß der Vergleich zwischen eingegebenen Suchargumenten und Lexika für ein jeweils eingegebenes Suchargument auf der Basis nur jeweils eines Lexikons durchgeführt wird.

18. Vorrichtung nach einem der Ansprüche 14 bis 17, wobei eine Gewichtungseinrichtung (11) vorgesehen ist, die derart ausgebildet ist, daß den ausgewählten Suchargumenten absolute Konfidenzwerte zugeordnet werden.

19. Vorrichtung nach einem der Ansprüche 14 bis 18, wobei die Auswahleinrichtung (12) derart ausgebildet ist, daß mit der Suchanfrage solche Datensätze ausgewählt werden, die jeweils einem der Suchargumente einer jeden Treffermenge entsprechende Attribute enthalten.

20. Vorrichtung nach einem Ansprüche 14 bis 19, wobei die Auswahleinrichtung (12) derart ausgebildet ist, daß mit der Suchanfrage solche Datensätze ausgewählt werden, die die größte Anzahl an mit jeweils einem Suchargumente einer jeden Treffermenge übereinstimmende Attribute besitzen.

21. Vorrichtung nach einem der Ansprüche 14 bis 20, wobei die Recheneinrichtung (6) derart ausgebildet ist, daß die Gesamtkonfidenzwerte durch Multiplikation der einzelnen Konfidenzwerte, die den Attributen des jeweiligen Datensatzes bzw. den entsprechenden Suchargumenten zugeordnet wurden, bestimmt werden, wobei vorzugsweise die Recheneinrichtung (6) derart ausgebildet ist, daß Konfidenzwerte für verschiedene Attribute einzeln und/oder gruppenweise gewichtet werden.

22. Vorrichtung nach einem der Ansprüche 14 bis 21, wobei eine Rückfrageeinrichtung (14) zur Generierung einer Rückfrage, die für eine Gruppe ausgewählter Suchargumente das Suchargument mit dem besten Konfidenzwert wiedergibt, vorgesehen ist und die Auswahleinrichtung (10) derart ausgebildet ist, daß sie bei Bestätigung der Rückfrage bzw. des Sucharguments mit dem besten Konfidenzwert die ausgewählte Treffermenge auf dieses Suchargument mit dem besten Konfidenzwert beschränkt.

23. Vorrichtung nach einem der Ansprüche 14 bis 22, wobei die Ausgabeeinrichtung (2) eine Sprachwiedergabeeinheit (8) zur akustischen Ausgabe des Datensatzes aufweist.

24. Vorrichtung nach einem der Ansprüche 14 bis 23, wobei sie als Telefonnummern-Auskunftssystem ausgebildet ist.

25. Computerprogrammprodukt mit auf einem computerlesbaren Datenträger gespeicherten Programmcode-Mitteln zur Durchführung der Verfahrensschritte gemäß einem der Ansprüche 1 bis 13.

## Claims

1. Method for automatically providing information by telephone by means of stored dictionaries for possible entries of individual attributes, by means of a search engine (7) which stores sought information together with associated attributes in the form of data records and by means of a voice recognition device (4), having the following steps:
(a) a search argument of a desired subscriber is queried for an attribute in a manner directed to a person searching for information,
(b) the verbal information obtained with the query for an attribute is compared with the entries stored in the dictionary belonging to this attribute, a hit list of entries in the dictionary belonging to the attribute which correspond or come closest to the information obtained in the query for the attribute is determined, individual confidence values are determined for the entries belonging to the hit list by means of the voice recognition device (4), said values indicating a probability of the respective entry corresponding to the information obtained in the query for the attribute,
(c) steps (a) and (b) are repeatedly carried out for one or more further attributes using the dictionary respectively belonging to the further attribute,
(d) a search query for all data records which comply with any combination of the entries in the various hit lists found in steps (a)-(c) is carried out, all possible combinations of the selected search arguments being permuted in the search query, and the data records which comply with the search query being returned,
(e) if an equivocal result is achieved, that is to say a plurality of data records are obtained, the data records obtained are weighted with total confidence values, which indicate a probability of the respectively obtained data record corresponding to the verbal information obtained in the query for the plurality of attributes, on the basis of the individual confidence values of the entries belonging to the respective data record, and the data record having the greatest total confidence value is output.

2. Method according to the preceding claim, the search arguments being queried phonetically by means of a voice recognition device (4).

3. Method according to one of the preceding claims, the search arguments being queried gradually for each attribute separately and/or in a dialogue-controlled manner.

4. Method according to one of the preceding claims, a plurality of separate dictionaries being provided according to various types of attributes and the comparison of search arguments which have been input and dictionaries for a search argument which has respectively been input being carried out on the basis only of one dictionary in each case.

5. Method according to one of the preceding claims, the selected search arguments being weighted with absolute confidence values, a confidence value range preferably being predefined, and steps (a) and (b) according to Claim 1 being repeated in the case of confidence values for the corresponding search argument which are outside this confidence value range.

6. Method according to one of the preceding claims, the search query being used to select those data records which each contain attributes corresponding to one of the search arguments in each hit list.

7. Method according to one of the preceding claims, the search query being used to select those data records which have the greatest number of attributes which correspond to one of the search arguments in each hit list in each case.

8. Method according to one of the preceding claims, the total confidence values being determined by multiplying the individual confidence values which have been assigned to the attributes in the respective data record or to the corresponding search arguments, confidence values for different attributes in the respective data record or the corresponding search arguments preferably being individually weighted.

9. Method according to one of the preceding claims, an inquiry, which represents the selected search argument for the respective attribute with the best confidence value, being generated for selected search arguments for one of the attributes or individual ones of the attributes and, in the event of return confirmation of the inquiry or the corresponding search argument, the hit list of the selected search arguments for the respective attribute being restricted to this search argument with the best confidence value.

10. Method according to one of the preceding claims, the data record being output according to step (e) in Claim 1 acoustically by means of a voice reproduction unit (8).

11. Method according to one of the preceding claims, a plurality of data records being output according to their total confidence values.

12. Method according to the preceding claim, in which a further attribute is queried in order to select a data record, the search argument which has been input preferably being compared only with the attribute values of the data records which have already been found.

13. Method according to one of the preceding claims, the method being used to announce telephone numbers.

14. Apparatus for automatically providing information by telephone by means of stored dictionaries for possible entries of individual attributes and by means of a search engine (7) which stores sought information together with associated attributes in the form of data records, having an input device (2) for verbally inputting a search argument of a desired subscriber for an attribute, a comparison device (9) for comparing the information obtained with the input for an attribute with the entries stored in the dictionary belonging to this attribute, a selection device (10) for determining a hit list of entries in the dictionary belonging to the attribute which correspond or come closest to the information obtained in the input for the attribute, a voice recognition device (4) for determining individual confidence values for the entries belonging to the hit list, said values indicating a probability of the respective entry corresponding to the information obtained in the query for the attribute, the input of a search argument, the comparison of the information obtained with the input with the stored entries, the determination of a hit list of entries and the determination of individual confidence values for the entries belonging to the hit list being able to be repeatedly carried out for one or more further attributes using the dictionary respectively belonging to the further attribute, a device for carrying out a search query (12) for all data records which comply with any combination of the entries found in the various hit lists, all possible combinations of the selected search arguments being permuted in the search query, and the data records which comply with the search query being returned, a computing device (6) for calculating total confidence values for the data records obtained, said values indicating a probability of the respectively obtained data record corresponding to the verbal information obtained in the input for the plurality of attributes, on the basis of the individual confidence values of the entries belonging to the respective data record, and an output device (2) for outputting the data record with the greatest total confidence value.

15. Apparatus according to Claim 14, the voice recognition device (4) being provided for the voice recognition of search arguments which have been input in spoken form.

16. Apparatus according to Claim 14 or 15, a query device (13) being provided and being designed in such a manner that the search arguments to be input are gradually queried for each attribute separately and/or in a dialogue-controlled manner.

17. Apparatus according to one of Claims 14 to 16, a memory (5) which can be connected to the voice recognition device (4) and stores a plurality of separate dictionaries according to various types of attributes being provided, and the comparison device (9) being designed in such a manner that the comparison of search arguments which have been input and dictionaries for a search argument which has respectively been input is carried out on the basis of only one dictionary in each case.

18. Apparatus according to one of Claims 14 to 17, a weighting device (11) being provided and being designed in such a manner that absolute confidence values are assigned to the selected search arguments.

19. Apparatus according to one of Claims 14 to 18, the selection device (12) being designed in such a manner that the search query is used to select those data records which each contain attributes corresponding to one of the search arguments in each hit list.

20. Apparatus according to one of Claims 14 to 19, the selection device (12) being designed in such a manner that the search query is used to select those data records which have the greatest number of attributes corresponding to a search argument in each hit list in each case.

21. Apparatus according to one of Claims 14 to 20, the computing device (6) being designed in such a manner that the total confidence values are determined by multiplying the individual confidence values which have been assigned to the attributes in the respective data record or to the corresponding search arguments, the computing device (6) preferably being designed in such a manner that confidence values for various attributes are weighted individually and/or in groups.

22. Apparatus according to one of Claims 14 to 21, an inquiry device (14) for generating an inquiry, which represents the search argument with the best confidence value for a group of selected search arguments, being provided, and the selection device (10) being designed in such a manner that, in the event of confirmation of the inquiry or the search argument with the best confidence value, the selected hit list is restricted to this search argument with the best confidence value.

23. Apparatus according to one of Claims 14 to 22, the output device (2) having a voice reproduction unit (8) for acoustically outputting the data record.

24. Apparatus according to one of Claims 14 to 23, said apparatus being in the form of a telephone number information system.

25. Computer program product having program code means which are stored on a computer-readable data storage medium and are intended to carry out the method steps according to one of Claims 1 to 13.

## Revendications

1. Procédé de fourniture téléphonique automatique de renseignements au moyen de dictionnaires mémorisés pour de possibles entrées d'attributs individuels, au moyen d'un moteur de recherche (7), dans lequel sont mémorisées sous la forme d'ensembles de données des informations recherchées ensemble avec des attributs leurs étant rattachés, et au moyen d'un équipement de reconnaissance vocale (4), avec les étapes suivantes :
(a) requête d'un argument de recherche d'un participant souhaité pour un attribut, adressé à un chercheur de renseignements,
(b) comparaison de l'information verbale obtenue à partir de la requête pour un attribut avec les entrées mémorisées dans le dictionnaire appartenant à cet attribut, détermination d'un quantité d'occurrences d'entrées dans le dictionnaire appartenant à l'attribut, lesquelles entrées correspondent à l'information obtenue à partir de la requête pour l'attribut ou s'en approchent le plus, détermination de valeurs de confiance uniques pour les entrées appartenant à la quantité d'occurrences via l'équipement de reconnaissance vocale (4), qui indiquent une probabilité de concordance de l'entrée respective avec l'information obtenue à travers la requête pour l'attribut,
(c) exécution répétée des étapes (a) et (b) pour un ou plusieurs attribut(s) suivant(s), par l'utilisation du dictionnaire respectif appartenant à l'attribut suivant,
(d) exécution d'une sollicitation de recherche pour tous les ensembles de données qui réalisent une quelconque combinaison des entrées, trouvées dans les étapes (a) à (c), des diverses quantités d'occurrences, dans laquelle dans la sollicitation de recherche toutes les combinaisons possibles des arguments de recherche sélectionnés sont permutées, et les ensembles de données qui réalisent la sollicitation de recherche sont renvoyés,
(e) dans le cas où un résultat univoque n'est pas atteint, c'est-à-dire que plusieurs ensembles de données sont obtenus, pondération des ensembles de données obtenus avec des valeurs de confiance totales qui indiquent une probabilité de concordance de l'ensemble de données respectif obtenu avec l'information verbale obtenue à travers la requête pour les plusieurs attributs, en fonction des valeurs de confiance uniques des entrées appartenant à l'ensemble de données respectif, et émission de l'ensemble de données avec la plus grande valeur de confiance totale.

2. Procédé selon la revendication précédente, dans lequel la requête des arguments de recherche est exécutée phonétiquement au moyen d'un équipement de reconnaissance vocale (4).

3. Procédé selon l'une des revendications précédentes, dans lequel la requête des arguments de recherche est exécutée progressivement pour chaque attribut, séparément et/ou commandée par un dialogue.

4. Procédé selon l'une des revendications précédentes, dans lequel plusieurs dictionnaires séparés correspondant à différents types d'attributs sont mis à disposition et la comparaison entre des arguments de recherche saisis et des dictionnaires pour un argument de recherche respectif saisi est exécutée sur la base de seulement un dictionnaire respectif.

5. Procédé selon l'une des revendications précédentes, dans lequel les arguments de recherche sélectionnés sont pondérés avec des valeurs de confiance absolues, dans lequel de préférence un domaine de valeurs de confiance est donné, et pour les valeurs de confiance données se situant en dehors de ce domaine de valeurs de confiance, les étapes (a) et (b) selon la revendication 1 sont répétées pour l'argument de recherche correspondant.

6. Procédé selon l'une des revendications précédentes, dans lequel avec la sollicitation de recherche, de tels ensembles de données sont sélectionnés qui contiennent respectivement des attributs correspondant à l'un des arguments de recherche de l'une de chaque quantité d'occurrences.

7. Procédé selon l'une des revendications précédentes, dans lequel avec la sollicitation de recherche, de tels ensembles de données sont sélectionnés qui possèdent le nombre le plus élevé d'attributs concordant avec respectivement l'un des arguments de recherche de l'une de chaque quantité d'occurrences.

8. Procédé selon l'une des revendications précédentes, dans lequel les valeurs de confiance totales sont fixées par multiplication des valeurs de confiance individuelles qui ont été affectées aux attributs de l'ensemble de données respectif ou aux arguments de recherche correspondants, dans lequel de préférence des valeurs de confiance sont pondérées individuellement pour différents attributs de l'ensemble de données respectif ou pour les arguments de recherche correspondants.

9. Procédé selon l'une des revendications précédentes, dans lequel pour des arguments de recherche sélectionnés pour l'un des attributs ou individuellement plusieurs des attributs, une requête supplémentaire est générée qui reproduit l'argument de recherche sélectionné pour l'attribut respectif avec la meilleure valeur de confiance, et la quantité d'occurrences des arguments de recherche sélectionnés pour l'attribut respectif est limité, après confirmation de retour de la requête supplémentaire ou de l'argument de recherche correspondant, à cet argument de recherche avec la meilleure valeur de confiance.

10. Procédé selon l'une des revendications précédentes, dans lequel l'émission de l'ensemble de données est exécutée conformément à l'étape (e) selon la revendication 1, acoustiquement au moyen d'une unité de reproduction vocale (8).

11. Procédé selon l'une des revendications précédentes, dans lequel plusieurs ensembles de données sont émis en correspondance avec leur valeur de confiance totale.

12. Procédé selon la revendication précédente, par lequel pour sélectionner un ensemble de données un attribut suivant fait l'objet d'une requête, dans lequel de préférence l'argument de recherche saisi n'est comparé qu'avec les valeurs d'attribut des ensembles de données déjà trouvés.

13. Procédé selon l'une des revendications précédentes, lequel est utilisé pour l'annonce de numéros de téléphone.

14. Dispositif de fourniture téléphonique automatique de renseignements au moyen de dictionnaires mémorisés pour de possibles entrées d'attributs individuels, et au moyen d'un moteur de recherche (7), dans lequel sont mémorisées sous la forme d'ensembles de données des informations recherchées ensemble avec des attributs leurs étant rattachés, doté d'un équipement de saisie (2) pour la saisie verbale d'un argument de recherche d'un participant souhaité pour un attribut, d'un équipement de comparaison (9) pour la comparaison de l'information obtenue à partir de la saisie pour un attribut avec les entrées mémorisées dans le dictionnaire appartenant à cet attribut, d'un équipement de sélection (10) pour la détermination d'une quantité d'occurrences d'entrées dans le dictionnaire appartenant à l'attribut, lesquelles entrées correspondent à l'information obtenue à partir de la saisie pour l'attribut ou s'en approchent le plus, d'un équipement de reconnaissance vocale (4) pour la détermination de valeurs de confiance uniques pour les entrées appartenant à la quantité d'occurrences, qui indiquent une probabilité de concordance de l'entrée respective avec l'information obtenue à travers la requête pour l'attribut, dans lequel la saisie d'un argument de recherche, la comparaison de l'information obtenue à partir de la saisie avec les entrées mémorisées, la détermination d'une quantité d'occurrences d'entrées et la détermination de valeurs de confiance uniques pour les entrées appartenant à la quantité d'occurrences est exécutable de manière répétée par l'utilisation du dictionnaire respectif appartenant à l'attribut suivant, d'un équipement pour l'exécution d'une sollicitation de recherche (12) pour tous les ensembles de données qui réalisent une quelconque combinaison des entrées trouvées des différentes quantités d'occurrences, dans lequel dans la sollicitation de recherche toutes les combinaisons possibles des arguments de recherche sélectionnés sont permutées, et les ensembles de données qui réalisent la sollicitation de recherche sont renvoyés, d'un équipement de calcul (6) pour le calcul de valeurs de confiance totales pour les ensembles de données obtenus qui indiquent une probabilité de concordance de l'ensemble de données respectif obtenu avec l'information verbale obtenue à travers la saisie pour les plusieurs attributs, en fonction des valeurs de confiance uniques des entrées appartenant à l'ensemble de données respectif, et d'un équipement d'émission (2) pour l'émission de l'ensemble de données avec la plus grande valeur de confiance totale.

15. Dispositif selon la revendication 14, dans lequel l'équipement de reconnaissance vocale (4) est prévu pour la reconnaissance vocale d'arguments de recherche saisis à l'oral.

16. Dispositif selon la revendication 14 ou 15, dans lequel un équipement de requête (13) est prévu et ainsi formé que les arguments de recherche à saisir font progressivement pour chaque attribut l'objet d'une requête séparée et/ou commandée par un dialogue.

17. Dispositif selon l'une des revendications 14 à 16, dans lequel est prévue une mémoire raccordable (5) à l'équipement de reconnaissance vocale (4), à l'intérieur de laquelle plusieurs dictionnaires séparés correspondant à différents types d'attributs sont mémorisés, et dans lequel l'équipement de comparaison (9) est ainsi formé que la comparaison entre des arguments de recherche saisis et des dictionnaires pour un argument de recherche respectif saisi est exécutée sur la base de seulement un dictionnaire respectif.

18. Dispositif selon l'une des revendications 14 à 17, dans lequel un équipement de pondération (11) est prévu, qui est ainsi formé qu'aux arguments de recherche sélectionnés sont affectées des valeurs de confiance absolues.

19. Dispositif selon l'une des revendications 14 à 18, dans lequel l'équipement de sélection (12) est ainsi formé qu'avec la sollicitation de recherche, de tels ensembles de données sont sélectionnés qui contiennent respectivement des attributs correspondant à l'un des arguments de recherche de l'une de chaque quantité d'occurrences.

20. Dispositif selon l'une des revendications 14 à 19, dans lequel l'équipement de sélection (12) est ainsi formé qu'avec la sollicitation de recherche, de tels ensembles de données sont sélectionnés qui possèdent le nombre le plus élevé d'attributs concordant avec respectivement un argument de recherche de l'une de chaque quantité d'occurrences.

21. Dispositif selon l'une des revendications 14 à 20, dans lequel l'équipement de calcul (6) est ainsi formé que les valeurs de confiance totales sont fixées par multiplication des valeurs de confiance individuelles qui ont été affectées aux attributs de l'ensemble de données respectif ou aux arguments de recherche correspondants, dans lequel de préférence l'équipement de calcul (6) est ainsi formé que des valeurs de confiance pour différents attributs sont pondérées individuellement ou de manière groupée.

22. Dispositif selon l'une des revendications 14 à 21, dans lequel un équipement de requête supplémentaire (14) est prévu pour générer une requête supplémentaire qui pour un groupe d'arguments de recherche sélectionnés reproduit l'argument de recherche avec la meilleure valeur de confiance, et l'équipement de sélection (10) est ainsi formé qu'après confirmation de retour de la requête supplémentaire ou de l'argument de recherche, elle limite la quantité d'occurrences sélectionnée à cet argument de recherche avec la meilleure valeur de confiance.

23. Dispositif selon l'une des revendications 14 à 22, dans lequel l'équipement d'émission (2) présente une unité de reproduction vocale (8) pour l'émission acoustique de l'ensemble de données.

24. Dispositif selon l'une des revendications 14 à 23, lequel est formé en tant que système de renseignement sur des numéros de téléphone.

25. Produit formant programme informatique doté de moyens de code de programmation mémorisés sur un support de données lisible par un ordinateur pour l'exécution des étapes du procédé selon l'une des revendications 1 à 13.
